# EUROPÄISCHE PATENTSCHRIFT

(11) **EP 0 482 675 B1**
(45) Veröffentlichungstag und Bekanntmachung des Hinweises auf die Patenterteilung: **05.10.1994**
(21) Anmeldenummer: 91121427.8
(22) Anmeldetag: 22.05.1987
(51) Int. Cl.: A23F 5/20

(54) **Verfahren zur Entcoffeinierung von Rohkaffee**
Process for decaffeinating green coffee
Procédé de décaféination de café vert

(30) Priorität: 20.06.1986 DE 3620622; 25.04.1987 DE 3713953
(43) Veröffentlichungstag der Anmeldung: 29.04.1992
(62) Teilanmeldung aus: 87107462.1
(73) Patentinhaber: KOHLENSÄURE-WERKE RUD. BUSE GMBH & CO., D-53557 Bad Hönningen (DE)
(72) Erfinder: Coenen, Hubert, Dr.-Ing., W-6209 Aarbergen 2 (DE); Ben-Nasr, Hedi, Dr. rer. nat., W-4650 Gelsenkirchen (DE)
(74) Vertreter: Liesegang, Roland, Dr.-Ing.

(56) Entgegenhaltungen:
- DE-A- 2 450 978
- DE-A- 3 318 317
- DE-A- 3 445 502
- FR-A- 2 360 260
- ANGEWANDTE CHEMIE, Band 90, Nr. 10, 1978, Seiten 747-755; G. WILKE: "Extraktion
- mit überkritischen Gasen - ein Vorwort"
- PROCESS ENGINEERING, September 1983, Seiten 32-35; D.H. LOGSDAIL: "Applicationsand prospects for supercritical extraction"

## Beschreibung

Die Erfindung betrifft ein Verfahren zur Entcoffeinierung von Rohkaffee gemäß dem Oberbegriff des Patentanspruchs 1. Ein derartiges Verfahren ist aus der DE 34 45 502 A1 bekannt.

Bei dem bekannten Verfahren wird so vorgegangen, daß die Entcoffeinierung bei einem Gasdruck über 200 bar und einer während des Entcoffeinierungsvorgangs auf über 70°C ansteigenden Tamperatur erfolgt und daß anschließend das extrahierte Coffein von der beladenen Gas bei tieferem, aber vorzugsweise noch überkritischem Druck abgetrennt wird, vorzugsweise durch Umkehrosmose mit wenigstens einer semipermeablen Membrane. Dieses Extraktionsverfahren beansprucht die Kaffeebohnen, insbesondere deren Zellstruktur, nicht unbeträchtlich, und darüberhinaus ist der Vorgang der Abtrennung des Coffeins aus dem damit beladenen Gas vergleichsweise aufwendig.

Weiterhin ist aus der DE 33 18 317 A1 ein Verfahren zum Aufschließen und Extrahieren von ätherische Bestandteile aufweisenden Stoffen aus natürlichen Produkten, wie Heilgewächsen, Gewürzen, Kaffee, Tee oder dergleichen, bekannt, bei dem die Produkte zusammen mit einer Extraktionsflüssigkeit, beispielsweise Wasser, für eine vorbestimmte Zeitdauer in einer Kammer einem hohen Gasdruck ausgesetzt werden, worauf unter schlagartigem Entspannen des Druckes das Produkt bzw. dessen Zellen innerhalb der Extraktionsflüssigkeit zum Zerplatzen gebracht wird. Dieses sogenannte Zellcracking-Verfahren beeinträchtigt somit die Zellstruktur der Kaffeebohnen derart, daß es zum Entcoffeinieren von Rohkaffee nicht einsetzbar ist.

Aufgabe der vorliegenden Erfindung ist es, das eingangs erwähnte Entcoffeinierungsverfahren so zu verbessern, daß eine weitgehende Schonung der Kaffeebohnen gewährleistet, insbesondere eine Denaturierung der weiteren Bestandteile des Rohkaffees vermieden ist, und daß das Verfahren besonders betriebssicher und wirtschaftlich durchgeführt werden kann, wobei trotzdem aber ein hoher Entcoffeinierungsgrad sichergestellt ist. Die Lösung dieser Aufgabe ergibt sich aus den kennzeichnenden Merkmalen des Patentanspruchs 1.

Der überraschende Erfolg dieses Druckwechselverfahrens ist u.a. darauf zurückzuführen, daß eine Reihe von Wirkungen auftreten, die sich in vorteilhafter Weise ergänzen. So wird durch das aufgenommene Wasser in den Zellen der Rohkaffeebohnen eine Wasser-Coffein-Lösung gebildet, die die Extraktion des Coffeins erleichtert. Die Extraktion anderer Stoffe, insbesondere derjenigen, die für die Aromabildung beim Rösten erforderlich sind, wird auf ein Minimum reduziert.

Durch das schnelle Entspannen des Gases erfolgt eine weitere Lockerung der gequollenen Bohnen. Außerdem bewirkt es durch die starke Volumenvergrößerung des in die Rohkaffeebohnenzelle diffundierten Gases einen Austreibeffekt der Coffein-Wasser-Lösung an die Rohbohnenoberfläche. Schließlich verhindert das in den Poren der Kaffeebohnen eingeschlossene und bei der Druckentlastung entweichende Gas, daß das an der Oberfläche der Kaffeebohnen angereicherte Coffein wieder in diese zurückdiffundiert.

Das Coffein wird mit dem überkritischen Gas selbst extrahiert, wenn der Gasdruck erneut auf 100 bar bis 200 bar bei einer Temperatur von 31°C bis 80°C erhöht und das überkritische Gas im Kreislauf gefahren wird und wenn durch Einleiten der mit Coffein beladenen Gasphase durch einen Wasser-Waschturm, der unter den gleichen Bedingungen von Temperatur und Druck wie im Extraktionsautoklaven gehalten wird, diese regeneriert und dem Extraktionsautoklaven erneut zugeführt wird.

Zum Aufbau der Gasatmosphäre sind Kohlendioxid oder eine Mischung aus Wasser und Kohlendioxid besonders geeignet. Es ist aber im Sinne dieser Erfindung, daß zum Aufbau der stationären Druckatmosphäre ein beliebiges Gas verwendet wird, welches sich hinsichtlich seiner thermodynamischen Eigenschaften so verhält, daß es in merklichen Konzentrationen in den mit der Wasser-Coffeinlösung gefüllten Rohbohnenzellen diffundiert. Auch eine Mischung aus Wasser mit diesem Gas kann vorteilhaft verwendet werden. Wie beim Abspülen der Rohkaffeebohnen kann auch hier eine mit Rohkaffee-Inhaltsstoffen gesättigte, coffeinfreie, wässrige Lösung verwendet werden.

Die Standzeit der Druckatmosphäre beträgt je nach Kaffeesorte und gewünschtem Entcoffeinierungsgrad einige Minuten bis einige Stunden. Die Entspannung der Gasatmosphäre kann schlagartig, oder aber in wenigen Minuten erfolgen, wobei ein Einfrieren des eingesetzten feuchten Rohkaffees infolge der Expansionskühlung auszuschließen ist.

Ferner wurde gefunden, daß sich der Restcoffeingehalt um das Zwei- bis Vierfache reduziert, wenn die extrahierten Kaffeebohnen sofort zentrifugiert werden. Durch das Zentrifugieren werden die Kaffeebohnen zusätzlich vorgetrocknet, so daß beim anschließenden Trocknen Energie eingespart wird.

Der Gegenstand der Erfindung wird anhand von Ausführungsbeispielen näher erläutert.

In der einzigen Figur ist das Verfahren zur Herstellung von entcoffeiniertem Rohkaffee dargestellt. Der Rohkaffee (8 bis 11 Gew.-% Naturfeuchte) wird dabei auf einen gewünschten Wassergehalt, vorzugsweise 40 Gew.-%, angefeuchtet und wahlweise in die Druckbehälter 51 bis 53, die mit Heizmänteln zur Thermostatisierung versehen sind, eingegeben. Die Druckatmosphäre in den Druckbehältern wird mittels einer Pumpe 82 aufgebaut. Das Gas wird aus dem Gasvorrat 81 entnommen, mit Pumpe 82 auf Extraktionsdruck komprimiert, im Wärmetauscher 83 auf Extraktionstemperatur gebracht und über die Leitungen 73 bis 75 den Druckbehältern 51 bis 53 wahlweise zugeführt. Nach Ablauf einer Extraktionszeit, die von den zu verarbeitenden Kaffeesorten und dem gewünschten Entcoffeinierungsgrad abhängig ist, wird ein unter Druck stehender Druckbehälter, z.B. 52 in den benachbarten Behälter, z.B. 51 teilentspannt. Die weitere Entspannung auf Tankdruck erfolgt über die Leitungen 76 bis 78, den Wärmetauscher 79 und die Leitung 80 in den Gasvorratsbehälter 81. Der Wärmetauscher 79 hat die Aufgabe, das durch Expansionskühlung vorgekühlte Gas zu verflüssigen. Zur selektiven Extraktion des infolge der Druckentlastung an die Oberfläche der Kaffeebohnen transportierten Coffeins wird der Gasdruck mittels Pumpe 82 erneut erhöht. Das aus dem Vorratstank 81 entnommene Gas wird dabei mittels Pumpe 82 auf Extraktionsdruck komprimiert und im Wärmetauscher 83 auf Extraktionstemperatur gebracht. Mittels Pumpe 64 wird das überkritische Gas im Kreislauf gefahren. Das mit Coffein beladene überkritische Gas verläßt die Autoklaven 51 bis 53 über die Leitungen 57 bis 59 und wird über Leitung 60 der Waschkolonne 61 zugeführt, wo es dem von oben zugegebenen Wasser entgegenströmt. Über Leitung 62 verläßt das von Coffein weitestgehend befreite überkritische Gas die Kolonne 61 und wird einem Aktivkohlefilter 63 zugeführt. Es hat sich nämlich gezeigt, daß eine vollständige Entcoffeinierung schneller erreicht wird, wenn die im Kreislauf gehaltene fluide Phase von Coffein vollständig regeneriert wird. Kolonne 61 und Aktivkohlebehälter 63 werden unter den gleichen Bedingungen von Temperatur und Druck wie in den Autoklaven 51 bis 53 gehalten, so daß eine wirtschaftliche isobare und isotherme Fahrweise möglich wird. Außerdem wird dadurch vermieden, daß der Wassergehalt der Rohkaffeebohnen in den Behältern 51 bis 53 während des Entcoffeinierungsprozesses sich ändert. Mittels Pumpe 64 wird das regenerierte überkritische Gas über den Wärmetauscher 65 und die Leitungen 54 bis 56 den Autoklaven 51 bis 53 erneut zugeführt.

Um den diskontinuierlichen Extraktionsprozeß quasi-kontinuierlich betreiben zu können, sind auf der Extraktionsseite mehrere Extraktionsbehälter vorgesehen, die in beliebiger Reihenfolge in den Extraktionsprozeß eingeschaltet werden können, um dann vom überkritischen Gas nacheinander durchströmt zu werden. In der Figur sind nur drei Autoklaven gezeichnet. Es ist aber im Sinne dieser Erfindung, weitere Autoklaven zu verwenden, die über die Leitungen 84 bis 87 an die Autoklaven 51 bis 53 angeschlossen werden. Die Gesamtzahl der für eine optimale Durchführung dieser Erfindung zu verwendenden Autoklaven hängt hauptsächlich von der Zahl der erforderlichen Druckpulsationen aber auch von den notwendigen Investitions- und Betriebskosten ab. Die Kaskadenschaltung hat den Vorteil, daß immer ein Extraktionsbehälter nach erfolgter Extraktion entleert und dann mit zu entcoffeinierendem Rohkaffee gefüllt werden kann, während die Extraktion in den anderen Extraktionsbehältern weiterläuft. Außerdem läßt sich durch das Hintereinanderschalten der Extraktionsbehälter eine hohe Coffeinsättigung des überkritischen Gases erreichen. Hierzu wird zunächst der am weitesten extrahierte Behälter mit frischen Gas versorgt. Danach durchströmt das teilweise mit Coffein beladene überkritische Gas die weiteren Extraktionsbehälter in der Weise, daß der letzte Extraktionsbehälter den Rohkaffee mit dem höchsten Coffeingehalt enthält. Hierdurch wird erreicht, daß zwischen Rohkaffee und Lösungsmittel immer eine für den Stoffaustausch wichtige opitmale Coffeinkonzentrationsdifferenz aufrechterhalten bleibt.

Das mit Coffein beladene Wasser verläßt die Kolonne 61 über die Leitung 66. In einer nachgeschalteten Prozeßstufe 67 wird das Coffein aus der wässrigen Coffeinlösung in bekannter Weise, vorzugsweise durch Abdampfen des Wassers, gewonnen und über die Leitung 68 entnommen. Das coffeinfreie Wasser wird über die Leitung 69 entnommen, mittels Pumpe 71 auf Extraktionsdruck gebracht und der Kolonne 61 erneut zugeführt. Die Wasserverluste werden dabei über Leitung 70 wieder ersetzt.

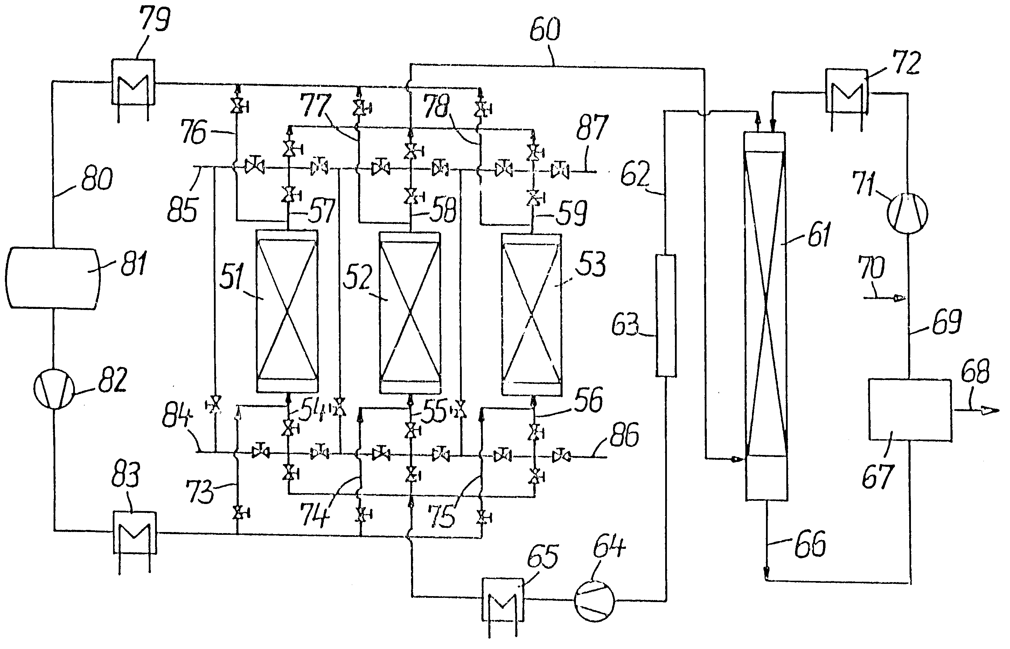

In einem Ausführungsbeispiel wurden nach dem Verfahrensschema der Figur 711 g Rohkaffe (ungeröstete Bohnen) mit einem Coffeingehalt von 1,26 Gew.-% mit Wasser auf einen Wassergehalt von 44,9 Gew.-% angefeuchtet. Der feuchte Rohkaffee wurde in einen Druckbehälter gegeben. Bei einer Temperatur von 60°C wurde Kohlendioxid in den Druckbehälter geleitet bis ein Druck von 250 bar erreicht war. Das überkritische Kohlendioxid wurde dann bei diesen Bedingungen von Temperatur und Druck im Kreislauf gefahren, wobei ein CO₂-Massenstrom von 24 kg/h eingehalten wurde. Das mit Coffein beladene CO₂ verließ den Druckbehälter kopfseitig und wurde zur Befreiung von Coffein durch drei hintereinander geschaltete Wasservorlagen geleitet, die insgesamt 1950 g Wasser enthalten und bei einer Temperatur von 60°C und einem Druck von 250 bar gehalten wurden. Das regenerierte überkritische Kohlendioxid wurde dem Druckbehälter erneut von unten zugeführt. Nach einer Stunde Extraktionszeit wurde die Gasatmosphäre im Druckbehälter innerhalb von fünf Minuten auf Normaldruck entspannt. Nach einer Standzeit von zehn Minuten wurde der Druck innerhalb von fünfzehn Minuten erneut auf 250 bar erhöht, und Coffein, das infolge des Druckwechsels leichter zugänglich wurde, wurde mit dem überkritischen CO₂ extrahiert. Der Druckwechsel wurde insgesamt dreimal wiederholt, wobei die Extraktionszeiten eine, zwei, zwei und eine Stunde betrugen. Die letzte Wasservorlage wurde nach jedem Druckwechsel erneuert, um eine vollständige Regenerierung der CO₂-Phase sicherzustellen. Nach Versuchsende wurden die Rohkaffeebohnen innerhalb von dreißig Minuten langsam auf Normaldruck entspannt und anschliessend bis auf 10 Gew.-% Wassergehalt getrocknet. Bei einem Lösungsmittelverhältnis von 120 kg CO₂/kg Rohkaffeebohnen (44,9 % Wassergehalt) wurde ein Restcoffeingehalt von 0,14 Gew.-%, bezogen auf Trockensubstanz, erreicht. Die auf Trockensubstanz bezogenen Gewichtsverluste betrugen insgesamt lediglich 1,7 Gew.-%. Aus der wässrigen Coffeinlösung wurde durch Abdampfen des Wassers ein weißer, leicht bitter schmeckender Abdampfrückstand erhalten, der einen Coffeingehalt von 85 Gew.-% i. Tr. aufwies.

## Patentansprüche

1. Verfahren zur Entcoffeinierung von Rohkaffee, bei dem das Coffein in einer wässrigen Lösung in der Bohnenzelle vorliegend mit Hilfe eines überkritischen, unter Normalbedingungen (1 bar, 20° C) gasförmigen Mediums dem Rohkaffee entzogen wird, dadurch gekennzeichnet, daß
der zu entcoffeinierende Rohkaffee auf einen Wassergehalt von 35 Gew.-% bis 50 Gew.-% angefeuchtet wird, der angefeuchtete Rohkaffee unter einer Gas-Atmosphäre von
75 bar bis 300 bar bei einer Temperatur von 20° C bis 80° C einige Minuten bis einige Stunden gehalten wird, die Gasatmosphäre schlagartig oder in wenigen Minuten auf
p_{c} ≧ p ≧ 1 bar (p_{c} = kritischer Druck des verwendeten Gases) entspannt wird in einer Weise, die ein Einfrieren des eingesetzten feuchten Rohkaffees infolge der Expansionskühlung des Gases ausschaltet, das nach der Druckentlastung leicht zugängliche Coffein
selektiv mit dem überkritischen Gas bei einer Temperatur von 20° C bis 80° C in einigen Minuten bis einigen Stunden extrahiert wird, indem der Druck erneut auf 75 bar bis 300 bar erhöht und das überkritische Gas im Kreislauf gefahren wird, wobei die überkritische Gasphase durch Einleiten durch einen Wasser-Waschturm regeneriert wird und das Coffein aus der wässrigen Coffeinlösung in bekannter Weise kontinuierlich gewonnen wird, der Vorgang des Unterdruckbringens, Entlastens und der
Extraktion des Coffeins mehrmals wiederholt wird,
der Rohkaffee anschließend zur Abtrennung noch merklicher Restwasser-Coffeinlösungsmengen in einer nachgeschalteten Zentrifuge behandelt wird, und daß die hierbei anfallende Wasser-Coffeinlösung in gleicher Weise wie oben zur Gewinnung des Coffeins behandelt wird,
der noch mit merklichen Restgehalten an Wasser beladene Rohkaffee durch Trocknung auf einen für die nachfolgende Röstung notwendigen minimalen Wassergehalt gebracht wird, der entcoffeinierte und vorgetrocknete Kaffee geröstet wird.

2. Verfahren nach Anspruch 1, dadurch gekennzeichnet, daß der zu entcoffeinierende Rohkaffee einen Wassergehalt von 40 Gew.-% aufweist.

3. Verfahren nach einem der Ansprüche 1 oder 2, dadurch gekennzeichnet, daß zum Aufbau der Gasatmosphäre Kohlendioxid verwendet wird.

4. Verfahren nach einem der Ansprüche 1 oder 2, dadurch gekennzeichnet, daß zum Aufbau der Druckatmosphäre ein Gas verwendet wird, welches sich hinsichtlich seiner thermodynamischen Eigenschaften so verhält, daß es in merklichen Konzentrationen in die mit der Wasser-Coffeinlösung gefüllten Rohbohnenzellen diffundiert.

5. Verfahren nach einem der Ansprüche 1 bis 4, dadurch gekennzeichnet, daß die Gasdruckatmosphäre vorzugsweise zwischen 100 bar und 200 bar und die Temperatur vorzugsweise zwischen 31° C und 80° C liegt.

6. Verfahren nach einem der Ansprüche 1 bis 5, dadurch gekennzeichnet, daß die Standzeit der Druckatmosphäre einige Minuten bis einige Stunden beträgt.

7. Verfahren nach einem der Ansprüche 1 bis 6, dadurch gekennzeichnet, daß der Rohkaffee pulsierend mehrmals unter die Gasatmosphäre gebracht wird, und daß nach jeder Druckentlastung das Coffein mit dem überkritischen Gas selektiv extrahiert wird.

8. Verfahren nach einem der Ansprüche 1 bis 7, dadurch gekennzeichnet, daß die Rohkaffeebohnen während des Extrahierens gerührt werden.

9. Verfahren nach einem der Ansprüche 1 bis 8, dadurch gekennzeichnet, daß die mit Coffein beladene überkritische Gasphase durch einen Wasser-Waschturm, der unter den gleichen Bedingungen von Temperatur und Druck wie im Extraktionsautoklaven gehalten wird, geleitet wird, und daß das Coffein aus der wässrigen Coffeinlösung in bekannter Weise kontinuierlich gewonnen wird.

10. Verfahren nach Anspruch 9, dadurch gekennzeichnet, daß das Coffein aus der wässrigen Coffein-Lösung durch Abdampfen des Wassers kontinuierlich gewonnen wird.

11. Verfahren nach einem der Ansprüche 1 bis 10, dadurch gekennzeichnet, daß der Rohkaffee anschließend zur mechanischen Abtrennung von einer Wasser-Coffein-Restlösung zentrifugiert wird.

12. Verfahren nach Anspruch 11, dadurch gekennzeichnet, daß die Wasser-Coffein-Restlösung einem üblichen Gewinnungsprozeß für Coffein unterzogen wird.

13. Verfahren nach einem der Ansprüche 1 bis 12, dadurch gekennzeichnet, daß für die Durchführung des Gesamtprozesses mehrere Druckautoklaven in Kaskadenschaltung verwendet werden.

14. Verfahren nach einem der Ansprüche 1 bis 13, dadurch gekennzeichnet, daß eine Teil-Druckentlastung eines Reaktors in einen zweiten Reaktor durch Druckausgleich erfolgt, wodurch das gasförmige Lösungsmittel teilweise zurückgewonnen wird.

15. Verfahren nach einem der Ansprüche 1 bis 14, dadurch gekennzeichnet, daß die bei der Restentspannung aus dem Druckreaktor austretenden Gase rekomprimiert und im Kreislauf geführt werden.

## Claims

1. Process for the decaffeination of raw coffee in which the caffeine present in an aqueous solution in the bean cell is removed from the raw coffee with the aid of a supercritical medium which is gaseous under normal conditions (1 bar, 20°C), characterised in that
- the raw coffee to be decaffeinated is moistened to a water content of from 35% by weight to 50% by weight,
- the moistened raw coffee is kept under a gas atmosphere of 75 bar to 300 bar at a temperature of 20°C to 80°C for a few minutes to a few hours,
- the gas atmosphere is released in stages or in a few minutes to p_{c} ≧ p ≧ 1 bar (p_{c} = critical pressure of the gas used) in such a way that freezing of the used wet raw coffee due to the expansion cooling of the gas is prevented,
- the caffeine easily accessible after pressure release is selectively extracted with the supercritical gas at a temperature of 20°C to 80°C in a few minutes to a few hours, the pressure being increased again to 75 bar to 300 bar and the supercritical gas being conveyed in the cycle, whereby the supercritical gas phase is regenerated by feeding through a water washing tower and the caffeine is continuously recovered from the aqueous caffeine solution in a known manner,
- the process of bringing the caffeine under pressure, releasing it and extracting it is repeated several times,
- the raw coffee is then treated in a subsequently connected centrifuge to separate still perceptible amounts of residual water-caffeine solution, and the water-caffeine solution thus obtained is treated in a similar way to above to recover the caffeine,
- the raw coffee still charged with perceptible residual amounts of water is brought by drying to a minimal water content necessary for the subsequent roasting, and the decaffeinated and pre-dried coffee is roasted.

2. Process according to claim 1, characterised in that the raw coffee to be decaffeinated has a water content of 40% by weight.

3. Process according to one of claims 1 or 2, characterised in that carbon dioxide is used to build up the gas atmosphere.

4. Process according to one of claims 1 or 2, characterised in that to build up the pressure atmosphere a gas is used which behaves in such a way with regard to its thermodynamic properties that it diffuses in noticeable concentrations into the raw bean cells filled with the water-caffeine solution.

5. Process according to one of claims 1 to 4, characterised in that the gas pressure atmosphere is preferably between 100 bar and 200 bar and the temperature is preferably between 31°C and 80°C.

6. Process according to one of claims 1 to 5, characterised in that the duration of the pressure atmosphere is a few minutes to a few hours.

7. Process according to one of claims 1 to 6, characterised in that the raw coffee is brought intermittently several times under the gas atmosphere and in that after each pressure release the caffeine is selectively extracted with the supercritical gas.

8. Process according to one of claims 1 to 7, characterised in that the raw coffee beans are stirred during extraction.

9. Process according to one of claims 1 to 8, characterised in that the supercritical gas phase charged with caffeine is conveyed through a water washing tower which is kept under the same temperature and pressure conditions as in the extraction autoclave, and in that the caffeine is continuously recovered in a known manner from the aqueous caffeine solution.

10. Process according to claim 9, characterised in that the caffeine is continuously recovered from the aqueous caffeine solution by evaporating the water.

11. Process according to one of claims 1 to 10, characterised in that the raw coffee is then centrifuged for the mechanical separation of a water-caffeine-residual solution.

12. Process according to claim 11, characterised in that the water-caffeine-residual solution is subjected to a conventional recovery process for caffeine.

13. Process according to one of claims 1 to 12, characterised in that several pressure autoclaves are used in series connection for carrying out the entire process.

14. Process according to one of claims 1 to 13, characterised in that a partial pressure release of one reactor into a second reactor is effected by pressure equalisation, whereby the gaseous solvent is partially recovered.

15. Process according to one of claims 1 to 14, characterised in that the gases emerging from the pressure reactor during residual pressure release are recompressed and conveyed in the cycle.

## Revendications

1. Procédé de décaféination de café vert, dans lequel la caféine, présente en solution aqueuse dans les cellules des grains, est extraite du café vert au moyen d'un agent qui est gazeux dans les conditions normales (1 bar, 20°C) et qui est utilisé dans des conditions supercritiques, caractérisé en ce que
le café vert a décaféiner est humidifié à une teneur en eau de 35% en poids à 50% en poids,
le café vert humidifié est maintenu pendant quelques minutes a quelques heures dans une atmosphère de gaz sous une pression de 75 à 300 bar et à une température de 20 à 80°C,
l'atmosphère de gaz est détendue, brusquement ou en quelques minutes, à p_{c} ≧ p ≧ 1 bar (p_{c} = pression critique du gaz utilise), d'une manière qui exclut une congélatian du café vert humide soumis au traitement, en conséquence de la réfrigération par expansion du gaz,
la caféine, facilement accessible à la suite de la détente, est extraite sélectivement avec le gaz supercritique, à une température de 20 à 80°C, en quelques minutes à quelques heures, par le fait que la pression est élevée de nouveau à 75-300 bar et le gaz supercritique est mis en circulation en circuit fermé, la phase gazeuse supercritique étant régénérée par passage à travers une tour de lavage à l'eau et la caféine étant récupérée en continu dans la solution aqueuse de caféine, de façon connue en soi,
le processus de mise sous pression, de détente et d'extraction de la caféine est répété plusieurs fois,
le café vert est ensuite traité dans une centrifugeuse disposée à la suite, pour la séparation de quantités encore appréciables de solution de caféine dans l'eau résiduelle, et la solution de caféine dans l'eau ainsi formée est traitée de la manière indiquée ci-dessus pour la récipération de la caféine,
le café vert, qui est encore chargé de quantités résiduelles appréciables d'eau, est amené par séchage à une teneur minimale en eau, nécessaire pour la torréfaction subséquente, et le café décaféiné et pré-séché est torréfié.

2. Procédé selon la revendication 1, caractérisé en ce que le café vert a décaféiner présente une teneur en eau de 40% en poids.

3. Procédé selon la revendication 1 ou 2, caractérisé en ce que de l'anhydride carbonique est utilisé pour la formation de l'atmosphère de gaz.

4. Procédé selon la revendication 1 ou 2, caractérisé en ce qu'on utilise, pour la formation de l'atmosphère sous pression, un gaz qui se comporte, en ce qui concerne ses propriétés thermodynamiques, de sorte qu'il diffuse en concentrations notables dans les cellules des grains verts remplies de solution de caféine dans l'eau.

5. Procédé selon l'une quelconque des revendications 1 à 4, caractérisé en ce que la pression de l'atmosphère de gaz se situe de préférence entre 100 bar et 200 bar et la température se situe de préférence entre 31°C et 80°C.

6. Procédé selon l'une quelconque des revendications 1 à 5, caractérisé en ce que la durée de maintien de l'atmosphère sous pression est comprise entre quelques minutes et quelques heures.

7. Procédé selon l'une quelconque des revendications 1 à 6, caractérisé en ce que le café vert est mis plusieurs fois par intermittence sous l'atmosphère de gaz, et en ce qu'après chaque détente, la caféine est extraite sélectivement avec le gaz supercritique.

8. Procédé selon l'une quelconque des revendications 1 à 7, caractérisé en ce que les grains de café vert sont agités pendant l'extraction.

9. Procédé selon l'une quelconque des revendications 1 à 8, caractérisé en ce que la phase gazeuse supercritique chargée de caféine est envoyée a travers une tour de lavage a l'eau, qui est maintenue dans les mêmes conditions de température et de pression que dans l'autoclave d'extraction, et en ce que la caféine est récupérée en continu dans la solution aqueuse de caféine, de façon connue en soi.

10. Procédé selon la revendication 9, caractérisé en ce que la caféine est récupérée en continu dans la solution aqueuse de caféine par évaporation de l'eau.

11. Procédé selon l'une quelconque des revendications 1 à 10, caractérisé en ce que le café vert est ensuite centrifugé pour la séparation mécanique d'une solution résiduelle de caféine dans l'eau.

12. Procédé selon la revendication 11, caractérisé en ce que la solution résiduelle de caféine dans l'eau est soumise à un traitement usuel de récupération de la caféine.

13. Procédé selon l'une quelconque des revendications 1 à 12, caractérisé en ce que plusieurs autoclaves sous pression sont utilisés en cascade pour l'exécution du procédé entier.

14. Procédé selon l'une quelconque des revendications 1 à 13, caractérisé en ce qu'il est effectué, par égalisation de pression, une détente partielle d'un réacteur dans un second réacteur, par laquelle le solvant gazeux est récupéré en partie.

15. Procédé selon l'une quelconque des revendications 1 a 14, caractérisé en ce que les gaz sortant du réacteur sous pression lors de la détente finale sont recomprimés et renvoyés dans le circuit fermé.
